# EUROPEAN PATENT SPECIFICATION

(11) **EP 3 488 707 B1**
(45) Date of publication and mention of the grant of the patent: **01.09.2021**
(21) Application number: 17830633.8
(22) Date of filing: 27.02.2017
(51) Int. Cl.: A23L 2/00, A23L 2/56, A23L 2/68, A23F 3/40

(54) **LINALOOL-CONTAINING COLORLESS TRANSPARENT DRINK**
LINALOOLHALTIGES FARBLOSES TRANSPARENTES GETRÄNK
BOISSON INCOLORE ET TRANSPARENTE COMPRENANT UN LINALOL

(30) Priority: 22.07.2016 JP 2016144579
(43) Date of publication of application: 29.05.2019
(73) Proprietor: Suntory Holdings Limited, Osaka-shi, Osaka 530-8203 (JP)
(72) Inventor: HOMBO, Mizuho, Kawasaki-shi Kanagawa 211-0067 (JP); YASUI, Yohei, Kawasaki-shi Kanagawa 211-0067 (JP); SENGA, Yoshinori, Kyoto 619-0284 (JP); TOMOKIYO, Takaya, Kawasaki-shi Kanagawa 211-0067 (JP)
(74) Representative: Vossius & Partner Patentanwälte Rechtsanwälte mbB
(86) International application number: PCT/JP2017/007554
(87) International publication number: WO 2018/016111

(56) References cited:
- WO-A1-2008/153118
- WO-A1-2014/119065
- WO-A1-2015/156282
- WO-A1-2015/156282
- JP-A- 2003 013 088
- JP-A- 2014 187 966
- JP-A- 2015 051 024
- JP-A- 2015 198 597
- JP-A- 2016 515 812
- US-A1- 2001 031 720
- CHANTAL BROSSARD ET AL: "DETERMINATION OF SENSORY OIL-WATER PARTITION COEFFICIENTS OF SINGLE AROMA COMPOUNDS COMBINING PANELIST FREE INTENSITY RATING AND THEORETICAL MODELING OF ODOR INTENSITY", JOURNAL OF SENSORY STUDIES, vol. 17, no. 5, November 2002 (2002-11), pages 445-460, XP055668723, US ISSN: 0887-8250, DOI: 10.1111/j.1745-459X.2002.tb00358.x

## Description

### TECHNICAL FIELD

The present invention relates to linalool-containing colorless transparent beverages and a method related thereto.

### BACKGROUND ART

In recent years, flavored water has gained popularity against the backdrop of the rise in consumers' health consciousness and natural preference. Flavored water is a beverage produced by adding ingredients such as sweetener, flavorant, essence, and/or fruit juice to water such as mineral water (including natural mineral water), and is a beverage with a water-like appearance, also called "near-water". Those beverages like flavored water, which are colorless and transparent but have a flavor of fruit or the like as well as sweetness and sourness, generally have such a clean taste that one can drink them as an alternative to water, and are characterized by being as easy as or easier to drink than water. In many cases, people do not drink down a supplied amount of flavored water in one gulp but sip it little by little over a long period of time. In such a case, flavored water is provided while being cooled to low temperatures, but may warm up to room temperature before it is drunk up, and even then some people continue to drink the rest of such warmed flavored water.

Linalool is a component found in essential oils of various plants. PTL 1 discloses a fruit-flavored beverage comprising linalool. PTL 2 discloses a beer-flavored effervescent beverage comprising linalool. PTL 3 discloses a tropical fruit juice comprising an acidulant, benzaldehyde and linalool. PTL 4 discloses an oolong tea comprising linalool and methyl salicylate. PTL 5 discloses a beer-like beverage comprising beta-damascenone, an acidulant and linalool.

CHANTAL BROSSARD ET AL: "DETERMINATION OF SENSORY OIL-WATER PARTITION COEFFICIENTS OF SINGLE AROMA COMPOUNDS COMBINING PANELIST FREE INTENSITY RATING AND THEORETICAL MODELING OF ODOR INTENSITY", JOURNAL OF SENSORY STUDIES, vol. 17, no. 5, November 2002 discloses a flavoured water comprising benzaldehyde and linanool.

### CITATION LIST

### PATENT LITERATURES

PTL 1: International Patent Publication No. WO 2015/156282
PTL 2: Japanese Patent Application Publication No. JP 2013-42675
PTL 3: US 2001/031720
PTL 4: JP 2014 187966
PTL 5: WO 2014/119065

### SUMMARY OF INVENTION

### TECHNICAL PROBLEM

Colorless transparent beverages like flavored water, due to their nature, have various restrictions on the types and amounts of ingredients added. First, the amount of fruit juice added is significantly restricted for the purpose of ensuring the maintenance of the colorless transparent nature of such beverages. Further, there is a demand from customers that colorless transparent beverages should have such a clean taste that one can drink them as an alternative to water, and thus, it is required to diminish the total flavor, including sweetness and sourness, of those colorless transparent beverages.

The present inventors found that when a small amount of linalool is used in a relatively less sour, colorless transparent beverage, this component can enhance the depth and breadth of taste of the beverage. However, the inventors also found that when linalool is used in a beverage, the beverage deteriorates in sharpness of aftertaste, and astringency is also imparted to the beverage. In other words, it was found that it is particularly when linalool and an acidulant are used in combination that a beverage deteriorates in sharpness of aftertaste. Moreover, it was revealed that when the temperature of a beverage rises to around ordinary or room temperature, the beverage becomes more likely to deteriorate in sharpness of aftertaste and take on an astringent taste.

As mentioned above, there has been a problem where using an acidulant and linalool in combination causes the aftertaste of a beverage to be less sharp, and this problem has been demanded to be resolved. An object of the present invention is to enhance the sharpness of aftertaste of a colorless transparent beverage comprising an acidulant and linalool. Another object of this invention is to decrease the astringency of a colorless transparent beverage comprising an acidulant and linalool.

### SOLUTION TO PROBLEM

The present inventors have made various studies, and as a result found that it is helpful to add at least one selected from the group consisting of benzaldehyde, methyl salicylate, and β-damascenone to a colorless transparent beverage comprising an acidulant and linalool. Thus, the inventors have completed the present invention.

More specifically, the present invention is directed, but not limited, to the following.

A beverage comprising:
100 to 5000 ppb of linalool,
at least one selected from the group consisting of benzaldehyde, methyl salicylate, and β-damascenone, and
an acidulant
wherein the beverage satisfies the following requirements (i) to (v):
   (i) an absorbance at a wavelength of 660 nm of 0.06 or less,
   (ii) a ΔE (color difference) value of 3.5 or less relative to pure water,
   (iii) a Brix of 1 to 10,
   (iv) an acidity of 0.020 to 0.300 g/100 g, and
   (v) a methyl salicylate content (a) of 5 to 500 ppb, and a weight ratio of the methyl salicylate content (a) to the linalool content (b) (a/b ratio) of 0.01 to 1.0;
a benzaldehyde content (c) of 5 to 300 ppb, and a weight ratio of the benzaldehyde content (c) to the linalool content (b) (c/b ratio) of 0.001 to 0.8; or
a β-damascenone content (d) of 1 to 100 ppb, and a weight ratio of the β-damascenone content (d) to the linalool content (b) (d/b ratio) of 0.0002 to 0.2.

A method for producing a beverage comprising 100 to 5000 ppb of linalool and an acidulant, the beverage satisfying the following requirements (i) to (iv):
(i) an absorbance at a wavelength of 660 nm of 0.06 or less,
(ii) a ΔE (color difference) value of 3.5 or less relative to pure water,
(iii) a Brix of 1 to 10, and
(iv) an acidity of 0.020 to 0.300 g/100 g,
the method comprising the step of adding an ingredient to the beverage so as to ensure that the beverage contains at least one selected from the group consisting of benzaldehyde, methyl salicylate, and β-damascenone, and
the method further comprising any one or more of the steps of:
adjusting a methyl salicylate content (a) in the beverage to be in the range of 5 to 500 ppb, and a weight ratio of the methyl salicylate content (a) to the linalool content (b) (a/b ratio) in the beverage to be in the range of 0.01 to 1.0;
adjusting a benzaldehyde content (c) in the beverage to be in the range of 5 to 300 ppb, and a weight ratio of the benzaldehyde content (c) to the linalool content (b) (c/b ratio) in the beverage to be in the range of 0.001 to 0.8; or
adjusting a β-damascenone content (d) in the beverage to be in the range of 1 to 100 ppb, and a weight ratio of the β-damascenone content (d) to the linalool content (b) (d/b ratio) in the beverage to be in the range of 0.0002 to 0.2.

### ADVANTAGEOUS EFFECT OF INVENTION

The present invention can enhance the sharpness of aftertaste of a colorless transparent beverage comprising an acidulant and linalool. To be specific, this invention can enhance the decreased sharpness of aftertaste of a beverage caused by combined use of an acidulant and linalool. Also, this invention can decrease the astringency of the beverage. These effects can be achieved without using large amounts of carbohydrate and/or fruit juice. Further, these effects can be obtained even when the temperature of a beverage rises to around ordinary or room temperature.

As referred to herein, the "sharpness of aftertaste" refers to the state of being freshened up with no unpleasant taste lingering after a beverage is swallowed.

Further, as referred to herein, the ordinary or room temperature can be, but is not limited to, a temperature of 1 to 35°C, preferably 15 to 30°C, for example 23°C.

### DESCRIPTION OF EMBODIMENTS

The following provides descriptions of the beverage of the present invention and a method related thereto.

Unless otherwise specified, "ppm" and "ppb" as used herein refer to ppm and ppb by weight/volume (w/v).

### (Linalool)

The origin of linalool contained in the beverage of the present invention is not limited. Linalool can be derived from natural ingredients such as plants or can be a synthetic product.

The beverage of the present invention comprises linalool at a concentration of 100 to 5000 ppb, preferably 150 to 4500 ppb, more preferably 150 to 1000 ppb, yet more preferably 150 to 600 ppb. Or the beverage of this invention comprises linalool at a concentration of 100 to 4000 ppb, 100 to 3000 ppb, 100 to 2000 ppb, or 100 to 1000 ppb.

If the linalool content falls below 100 ppb, the effect to enhance the sharpness of aftertaste is not exhibited prominently since the sharpness of aftertaste of a beverage is not too bad in the first place. On the other hand, if the linalool content exceeds 5000 ppb, the problems with sharpness of aftertaste and astringency become too severe.

### (Benzaldehyde, methyl salicylate, β-damascenone)

The beverage of the present invention comprises at least one selected from the group consisting of benzaldehyde, methyl salicylate, and β-damascenone. In particular, it is preferred that the beverage of this invention comprise two or more of them, since the sharpness of aftertaste of the beverage is further enhanced. To be specific, the beverage of this invention can comprise benzaldehyde and methyl salicylate, or benzaldehyde and β-damascenone, or methyl salicylate and β-damascenone, or all of these three compounds. The contents of benzaldehyde, methyl salicylate, and β-damascenone in the beverage of this invention are not particularly limited as long as they can enhance sharpness of aftertaste and astringency.

The content of methyl salicylate in the beverage of the present invention is in the range of 5 to 500 ppb, more preferably 5 to 400 ppb, yet more preferably 10 to 300 ppb, still more preferably 15 to 200 ppb.

The weight ratio of the methyl salicylate content (a) to the linalool content (b) (a/b ratio) in the beverage of the present invention is in the range of 0.01 to 1.0, more preferably 0.01 to 0.80, yet more preferably 0.01 to 0.60, still more preferably 0.01 to 0.40.

The content of benzaldehyde in the beverage of the present invention is in the range of 5 to 300 ppb, more preferably 5 to 250 ppb, yet more preferably 5 to 200 ppb.

The weight ratio of the benzaldehyde content (c) to the linalool content (b) (c/b ratio) in the beverage of the present invention is in the range of 0.001 to 0.8, yet more preferably 0.001 to 0.6, still more preferably 0.001 to 0.4.

The β-damascenone content (d) in the beverage of the present invention is in the range of 1 to 100 ppb, more preferably 1 to 80 ppb.

The weight ratio of the β-damascenone content (d) to the linalool content (b) (d/b ratio) in the beverage of the present invention is in the range of 0.0002 to 0.2, more preferably 0.001 to 0.2, yet more preferably 0.001 to 0.1.

The origins of benzaldehyde, methyl salicylate, and β-damascenone used in the present invention are not limited. These compounds can be derived from natural ingredients such as plants or can be synthetic products.

### (1-Hexanol, cis-3-hexenol)

The beverage of the present invention is preferred to further comprise 1-hexanol and/or cis-3-hexenol at a concentration of 1 ppb or more. The aforementioned content means the total content of 1-hexanol and cis-3-hexenol. For the sake of confirmation, the beverage of this invention can comprise either one or both of 1-hexanol and cis-3-hexenol.

The content of 1-hexanol in the beverage of the present invention is in the range of preferably 5 to 200 ppb, more preferably 5 to 150 ppb. The content of cis-3-hexenol in the beverage of this invention is in the range of preferably 10 to 1000 ppb, more preferably 20 to 900 ppb.

The origins of 1-hexanol and cis-3-hexenol used in the present invention are not limited. These compounds can be derived from natural ingredients such as plants or can be synthetic products.

### (Quantitative measurement of ingredients in beverage)

In relation to the present invention, the contents or concentrations of linalool, benzaldehyde, methyl salicylate, β-damascenone, 1-hexanol, and cis-3-hexenol in a beverage (sample solution) are, unless otherwise specified, measured using a GC/MS analyzer by following the procedure described below.

Five grams of a sample solution is measured out in a vial (with a volume of 20 mL), and 1.5 g of NaCl is added. Then, solid phase microextraction is performed with SPME (DVB/CAR/PDMS) assemblies produced by Supelco to extract the aforementioned components present in the gas phase at 40°C for 20 minutes. After the components of interest, including linalool, are extracted, they are analyzed by GC/MS. Quantitative values are determined by the standard addition method. The conditions for GC/MS analysis are as follows.
System:
   GC: GC7890B, produced by Agilent Technologies
   MS: 5977A, produced by Agilent Technologies
Column: Inert Cap Pure-WAX, 30 m×0.25 mm i.d., df = 0.25 µm
Quantitative ions:
   Linalool, m/z = 93
   Methyl salicylate, m/z = 120
   Benzaldehyde, m/z = 106
   β-Damascenone, m/z = 121
   1-Hexanol, m/z = 56
   cis-3-Hexenol, m/z = 67
Temperature conditions: 40°C (5 min.) => 10°C/min. => 260°C
Carrier gas flow rate: He at 1.2 mL/min.
Inlet temperature: 250°C
Interface temperature: 250°C
Ion source temperature: 230°C

### (Colorless transparent beverage)

The beverage of the present invention is colorless. The colorless appearance of the beverage can be defined by a ΔE (color difference) value of transmitted light as measured relative to pure water using a colorimetric color difference meter (e.g., ZE 2000 (produced by Nippon Denshoku Industries Co., Ltd.)). To be specific, the ΔE value of the beverage of this invention as measured relative to pure water is 3.5 or less. The ΔE value is preferably 2.3 or less.

Also, the beverage of the present invention is transparent. By stating that "the beverage is transparent", it is meant that the beverage is not white turbid like so-called sports drinks nor cloudy like cloudy fruit juices, and is visually transparent like water. The transparency of the beverage can be converted to numerical data using a known technique for measuring liquid turbidity. The transparency of the beverage can be defined by absorbance at a wavelength of 660 nm as measured using an ultraviolet visible spectrophotometer (e.g., UV-1600 (produced by Shimadzu Corporation)). To be specific, the beverage of this invention has an absorbance at a wavelength of 660 nm of 0.06 or less.

### (Brix)

The beverage of this invention has a Brix value reduced to low levels. To be specific, the beverage of this invention has a Brix of 1 to 10, preferably 2 to 10, more preferably 3 to 10.

The Brix is a value obtained by converting a refractive index measured at 20°C using a sugar content meter, refractometer, etc. into a mass/mass percentage of sucrose in solution based on the conversion table published by ICUMSA (the International Commission for Uniform Methods of Sugar Analysis), and represents the concentration of soluble solids in solution. The Brix is expressed in unit of "°Bx", "%" or "degree". A low Brix value of a beverage indicates a low concentration of soluble solids including carbohydrate.

### (Acidity)

The beverage of the present invention has an acidity of 0.020 to 0.300 g/100 g, preferably 0.030 to 0.300 g/100 g, more preferably 0.040 to 0.300 g/100 g. If the acidity exceeds 0.300 g/100 g, a beverage becomes relatively intense in sourness -- this is not desirable because of the restrictions of colorless transparent beverages. On the other hand, it is also not desirable that the acidity falls below 0.020 g/100 g, since a beverage becomes too low in sourness.

The "acidity" as used herein is a value serving as an index for acid content, and can be determined by calculation based on the amount of an alkali, such as sodium hydroxide, required for neutralizing a certain amount of a beverage (sample) with said alkali (to pH 7.0). Acidity measurement can be conducted using an automatic titrator (e.g., Mettler Toledo DL50). In this invention, the acidity is expressed using a value calculated in terms of citric acid content (i.e., calculated from said alkali amount required for neutralization based on the assumption that the acid contained in a beverage is exclusively citric acid).

### (Acidulant)

The beverage of the present invention comprises an acidulant. The type of an acidulant is not limited, and typical examples of the acidulant include citric acid, malic acid, lactic acid, phosphoric acid, tartaric acid, gluconic acid, and salts thereof. In particular, citric acid, malic acid, and salts thereof are preferred. The beverage of this invention can only contain any one of those acidulants or can contain two or more of them. The term "acidulant" as used herein in relation to this invention encompasses not only food additives but also acids derived from fruit juice. To be specific, if the beverage contains a fruit juice which contains such an acid as listed above, said acid is regarded as an acidulant.

When the beverage of the present invention contains such an acidulant as specifically listed above, the content of said acidulant is not particularly limited as long as the acidity of the beverage falls within the particular range mentioned above. However, when the beverage of this invention contains citric acid or a salt thereof, the content of said acidulant is preferably in the range of 0.020 to 0.300 g/100 g. When the beverage of this invention contains malic acid or a salt thereof, the content of said acidulant is preferably in the range of 0.026 to 0.392 g/100g. The total content of said acidulants specifically listed above in the beverage of this invention is preferably in the range of 0.01 to 1.20 g/100 g.

### (Mineral)

The beverage of the present invention preferably contains a mineral. The beverage of this invention is suitable, without limitation, for use as a rehydration beverage consumed in summer or while doing sports. For such a purpose, the beverage of this invention can be provided as a beverage for supplementing minerals lost during sweating, by adjusting the concentration of a mineral to be within an appropriate range. Examples of the mineral include, but are not limited to, sodium, potassium, magnesium, calcium, and iron. Such minerals can be added to the beverage of this invention in the form of salts that can be used in foods and beverages, or in the form of deep ocean water, seaweed essence, or the like which are rich in such minerals. In the beverage of this invention, one of such minerals can be used alone, or two or more thereof can be used in combination. The mineral used in the beverage of this invention is preferably sodium.

The content of a mineral in the beverage of the present invention is not particularly limited, but is for example in the range of 0.1 to 50 mg/100 mL. This content is preferably 0.1, 0.5, 1, 2, 3, 4 or 5 mg/100 mL or more, and also is preferably 50, 49, 48, 47, 46, 45, 44, 43, 42, 41 or 40 mg/100 mL or less. The mineral content in the beverage of this invention is in the range of preferably 0.1 to 50 mg/100 mL, more preferably 2 to 45 mg/100 mL, yet more preferably 5 to 40 mg/100 mL. When the mineral is used in the form of a salt, the content of the mineral shall be calculated in terms of its free form.

### (Tannin)

The beverage of the present invention has a tannin content of, but not particularly limited to, 150 ppm or less. Since tannin, when present in large amounts, tends to cause coloration of a beverage, the colorless transparent beverage of this invention is preferred to be low in tannin content. Also, since tannin has a peculiar astringent taste, it may impair the effects of this invention when it is present in the beverage in large amounts. The tannin content in the beverage of this invention is preferably 100 ppm or less, 70 ppm or less, 50 ppm or less, or 40 ppm or less. Also, the tannin content in the beverage of this invention is 0 ppm or more.

In the present invention, the content of tannin in a beverage can be measured by the official analytical method (ferrous tartrate method) specified in "A Commentary of Analytical Manual for Standards Tables of Food Composition in Japan, Fifth Revised Edition" (ed. by Japan Food Research Laboratories, pub. by Chuohoki Publishing Co., Ltd., July 2001, p.252). According to this official analytical method, the tannin content can be determined by measuring the absorbance at 540 nm of a component colored by a ferrous tartrate reagent serving as a coloring agent. For example, a calibration curve is constructed using ethyl gallate as a reference, and the concentration of ethyl gallate equivalent to the absorbance of a sample is read out from the calibration curve. Then, the resulting reading can be converted to yield a tannin content.

### (Other components)

In addition to the different ingredients described hereinabove, various additives used in common beverages, such as flavorant, sugar (e.g., glucose, fructose, sucrose), enrichment (e.g., vitamin), antioxidant, emulsifier, preservative, essence, dietary fiber, pH adjustor, and quality stabilizer, can be added to the beverage of the present invention, to the extent that such additives do not impair the effects of the present invention.

The flavorant used in the beverage of the present invention is not particularly limited, but is preferably a flavorant that imparts a natural taste and refreshing flavor to the beverage. Examples of such a flavorant include, but are not limited to, fruit-based flavor, citrus-based flavor, mint-based flavor, coffee flavor, cocoa flavor, and tea flavor (including black tea flavor).

The type of the beverage provided by the present invention is not particularly limited, as long as the beverage is a refreshing beverage. The inventive beverage can be of any type, including nutritional beverage, functional beverage, tea beverage (e.g., black tea, oolong tea), and flavored water (near water) beverage, but is preferably flavored water. In particular, it is preferred that the beverage of this invention be a tea-flavored beverage.

Also, the beverage of the present invention can be a carbonated beverage or non-carbonated beverage. Preferably, the beverage of this invention is a non-carbonated beverage. Additionally, when the beverage of this invention is provided as a carbonated (*i.e.,* effervescent) beverage, the method for producing a carbonated beverage is not particularly limited, and the carbonated beverage can be produced by fermenting a beverage to allow carbon dioxide to be produced in the beverage or by artificially injecting carbon dioxide into a beverage.

The beverage of the present invention can be a packaged beverage, which is a beverage that is heat sterilized and packed in a package. The package used is not particularly limited, and exemplary packages include PET bottle, aluminum can, steel can, carton, cup for chilled drink, and glass bottle. *Inter alia,* it is preferred to use a colorless transparent package such as PET bottle, since one can see the characteristic colorless transparent appearance of the beverage of this invention while the beverage is packed in such a package. When heat sterilization is performed, the method of heat sterilization is not particularly limited. Heat sterilization can be performed using a common method such as UHT sterilization or retort sterilization. The temperature conditions for heat sterilization process are not particularly limited, and are, for example, 65 to 130°C, preferably 85 to 120°C, for 10 to 40 minutes. However, any other sterilization process can also be performed at an appropriate temperature for several seconds, such as 5 to 30 seconds, as long as such a process can achieve a comparable sterilizing value to that process under the aforementioned conditions.

### (Method)

In another aspect, the present invention is directed to a method for producing a beverage comprising 100 to 5000 ppb of linalool and an acidulant, the beverage satisfying the following requirements (i) to (iv):
(i) an absorbance at a wavelength of 660 nm of 0.06 or less,
(ii) a ΔE (color difference) value of 3.5 or less relative to pure water,
(iii) a Brix of 1 to 10, and
(iv) an acidity of 0.020 to 0.300 g/100 g.
Said method of this invention comprises the step of adding an ingredient to the beverage so as to ensure that the beverage contains at least one selected from the group consisting of benzaldehyde, methyl salicylate, and β-damascenone. Further, said method comprises any one or more of the steps of:
adjusting a methyl salicylate content (a) in the beverage to be in the range of 5 to 500 ppb, and a weight ratio of the methyl salicylate content (a) to the linalool content (b) (a/b ratio) in the beverage to be in the range of 0.01 to 1.0;
adjusting a benzaldehyde content (c) in the beverage to be in the range of 5 to 300 ppb, and a weight ratio of the benzaldehyde content (c) to the linalool content (b) (c/b ratio) in the beverage to be in the range of 0.001 to 0.8; or
adjusting a β-damascenone content (d) in the beverage to be in the range of 1 to 100 ppb, and a weight ratio of the β-damascenone content (d) to the linalool content (b) (d/b ratio) in the beverage to be in the range of 0.0002 to 0.2.

Since said method of the present invention makes it possible to enhance the sharpness of aftertaste of the beverage or to decrease the astringency of the beverage, this invention is also directed to a method for enhancing the sharpness of aftertaste of the beverage or decreasing the astringency of the beverage.

The types and contents of ingredients contained in a beverage, weight ratios of different ingredients, absorbance, ΔE value, Brix, acidity, and their preferred ranges and adjustment procedures are as described above in relation to the beverage of this invention or are obvious from the descriptions given above. The timings of different steps are also not limited. For example, the aforementioned steps can be performed simultaneously with, or separately from, other steps such as absorbance adjustment step, ΔE adjustment step, Brix adjustment step, acidity adjustment step, and linalool content adjustment step, or all those steps can be performed in random order. Any procedure can be adopted as long as the beverage finally obtained satisfies the aforementioned requirements.

### (Numerical ranges)

For the sake of clarification, all numerical ranges defined herein by upper and lower limits, *i.e.* defined as "lower limit to upper limit", include their upper and lower limits. For example, the range defined as "1 to 2" includes 1 and 2.

### EXAMPLES

Hereunder, the present invention will be described by way of working examples, but this invention is not limited to these examples.

### (Test Example 1)

Different beverages were prepared by mixing high fructose corn syrup, citric acid, and linalool with water in the amounts shown in the table below. The prepared beverages were measured for their absorbance at a wavelength of 660 nm using a spectrophotometer (UV-1600 (produced by Shimadzu Corporation)), and also measured for their ΔE value of transmitted light relative to pure water using a colorimetric color difference meter (ZE 2000 (produced by Nippon Denshoku Industries Co., Ltd.)). All of the beverages had an absorbance of 0.06 or less and a ΔE value of transmitted light of 3.5 or less relative to pure water. Also, all of the beverages had a tannin content of 0 ppm (below detection limit).

The different beverages were subjected to sensory evaluation by 3 panelists to determine whether the sharp aftertaste of these beverages was felt. To be specific, the beverages were rated on a six-grade scale from 1 to 6, with "1" being "no sharp aftertaste was felt" and "6" being "sharp aftertaste was felt most strongly". The averages of their ratings are shown in the table given below. The same sensory rating procedure was adopted in the other test examples.

Additionally, in all of the test examples given herein, the Brix values shown in the tables are those values derived from the particular sugar used, but were actually almost the same as the measured Brix values of the whole beverages.

**[Table 1]**

| | Trial Product 1 | Trial Product 2 | Trial Product 3 | Trial Product 4 | Trial Product 5 | Trial Product 6 | Trial Product 7 |
|---|---|---|---|---|---|---|---|
| High fructose corn syrup (mass%) | 6.62 | | | | | | |
| Citric acid (mass%) | 0.120 | | | | | | |
| Linalool (ppb) | 0 | 50 | 100 | 500 | 1000 | 2500 | 5000 |
| Brix (°Bx) | 5.00 | 5.00 | 5.00 | 5.00 | 5.00 | 5.00 | 5.00 |
| Acidity (g/100g) | 0.120 | 0.120 | 0.120 | 0.120 | 0.120 | 0.120 | 0.120 |
| Sensory rating (10°C) | 5.0 | 4.3 | 4.0 | 4.0 | 3.0 | 3.0 | 3.0 |
| Sensory rating (20°C) | 4.0 | 3.7 | 2.3 | 2.0 | 1.7 | 1.0 | 1.0 |

As is evident from the above table, when beverages contain linalool in an amount within a certain range, the problem with sharpness of aftertaste becomes manifest.

### (Test Example 2)

Different beverages were prepared by mixing ingredients with water in the amounts shown in the table below. The prepared beverages were measured for their absorbance at a wavelength of 660 nm and their ΔE value of transmitted light relative to pure water by the same procedure as in Test Example 1. All of the beverages had an absorbance of 0.06 or less and a ΔE value of transmitted light of 3.5 or less relative to pure water. Also, all of the beverages had a tannin content of 0 ppm (below detection limit).

The different beverages were subjected to sensory evaluation by the same procedure as in Test Example 1. The averages of their ratings are shown in the table given below.

**[Table 2]**

| | Trial Product 8 | Trial Product 9 | Trial Product 10 | Trial Product 11 | Trial Product 12 | Trial Product 13 | Trial Product 14 | Trial Product 15 | Trial Product 16 | Trial Product 17 | Trial Product 18 | Trial Product 19 |
|---|---|---|---|---|---|---|---|---|---|---|---|---|
| High fructose corn syrup (mass%) | 6.62 | | | | | | | | | | | |
| Citric acid (mass%) | 0.120 | | | | | | | | | | | |
| Linalool (ppb) | 100 | 100 | 100 | 500 | 500 | 500 | 500 | 500 | 500 | 500 | 5000 | 5000 |
| Methyl salicylate (ppb) | 0 | 5 | 100 | 0 | 1 | 5 | 20 | 30 | 500 | 800 | 0 | 50 |
| Methyl salicylate/linalool | 0 | 0.05 | 1.0 | 0 | 0.002 | 0.01 | 0.04 | 0.06 | 1.0 | 1.6 | 0 | 0.01 |
| Brix (°Bx) | 5.00 | | | | | | | | | | | |
| Acidity (g/100g) | 0.120 | | | | | | | | | | | |
| Sensory rating (20°C) | 2.3 | 4.0 | 4.0 | 2.0 | 2.3 | 3.7 | 4.0 | 4.3 | 4.0 | 3.0 | 1.0 | 3.8 |

As is evident from the above table, methyl salicylate had a capability of enhancing the sharpness of aftertaste. Also, particularly superior effects were obtained when the methyl salicylate content and the methyl salicylate/linalool weight ratio fell within the certain ranges.

### (Test Example 3)

Different beverages were prepared by mixing ingredients with water in the amounts shown in the table below. The prepared beverages were measured for their absorbance at a wavelength of 660 nm and their ΔE value of transmitted light relative to pure water by the same procedure as in Test Example 1. All of the beverages had an absorbance of 0.06 or less and a ΔE value of transmitted light of 3.5 or less relative to pure water. Also, all of the beverages had a tannin content of 0 ppm (below detection limit).

The different beverages were subjected to sensory evaluation by the same procedure as in Test Example 1. The averages of their ratings are shown in the table given below.

**[Table 3]**

| | Trial Product 20 | Trial Product 21 | Trial Product 22 | Trial Product 23 | Trial Product 24 | Trial Product 25 | Trial Product 26 | Trial Product 27 | Trial Product 28 | Trial Product 29 | Trial Product 30 | Trial Product 31 |
|---|---|---|---|---|---|---|---|---|---|---|---|---|
| High fructose corn syrup (mass%) | 6.62 | | | | | | | | | | | |
| Citric acid (mass%) | 0.120 | | | | | | | | | | | |
| Linalool (ppb) | 100 | 100 | 300 | 300 | 500 | 500 | 500 | 500 | 500 | 500 | 5000 | 5000 |
| Benzaldehyde (ppb) | 0 | 5 | 0 | 300 | 0 | 1 | 5 | 100 | 300 | 500 | 0 | 5 |
| Benzaldehyde/linalool | 0 | 0.05 | 0 | 1 | 0 | 0.002 | 0.01 | 0.2 | 0.6 | 1 | 0 | 0.001 |
| Brix (°Bx) | 5.00 | | | | | | | | | | | |
| Acidity (g/100g) | 0.120 | | | | | | | | | | | |
| Sensory rating (20°C) | 2.3 | 4.0 | 2.0 | 4.3 | 2.0 | 2.0 | 4.0 | 4.3 | 3.7 | 2.0 | 1.0 | 3.7 |

As is evident from the above table, benzaldehyde had a capability of enhancing the sharpness of aftertaste. Also, particularly superior effects were obtained when the benzaldehyde content and the benzaldehyde/linalool weight ratio fell within the certain ranges.

### (Test Example 4)

Different beverages were prepared by mixing ingredients with water in the amounts shown in the table below. The prepared beverages were measured for their absorbance at a wavelength of 660 nm and their ΔE value of transmitted light relative to pure water by the same procedure as in Test Example 1. All of the beverages had an absorbance of 0.06 or less and a ΔE value of transmitted light of 3.5 or less relative to pure water. Also, all of the beverages had a tannin content of 0 ppm (below detection limit).

The different beverages were subjected to sensory evaluation by the same procedure as in Test Example 1. The averages of their ratings are shown in the table given below.

**[Table 4]**

| | Trial Product 32 | Trial Product 33 | Trial Product 34 | Trial Product 35 | Trial Product 36 | Trial Product 37 | Trial Product 38 | Trial Product 39 | Trial Product 40 | Trial Product 41 | Trial Product 42 |
|---|---|---|---|---|---|---|---|---|---|---|---|
| High fructose corn syrup (mass%) | 6.62 | | | | | | | | | | |
| Citric acid (mass%) | 0.120 | | | | | | | | | | |
| Linalool (ppb) | 100 | 100 | 100 | 500 | 500 | 500 | 500 | 500 | 500 | 5000 | 5000 |
| β-Damascenone (ppb) | 0 | 1 | 20 | 0 | 0.2 | 1 | 10 | 100 | 300 | 0 | 1 |
| β-Damascenone/linalool | 0 | 0.01 | 0.2 | 0 | 0.0004 | 0.002 | 0.02 | 0.2 | 0.6 | 0 | 0.0002 |
| Brix (°Bx) | 5.00 | | | | | | | | | | |
| Acidity (g/100g) | 0.120 | | | | | | | | | | |
| Sensory rating (20°C) | 2.3 | 4.0 | 4.3 | 2.0 | 2.7 | 4.0 | 4.0 | 3.7 | 2.0 | 1.0 | 3.7 |

As is evident from the above table, β-damascenone had a capability of enhancing the sharpness of aftertaste. Also, particularly superior effects were obtained when the β-damascenone content and the β-damascenone/linalool weight ratio fell within the certain ranges.

### (Test Example 5)

Different beverages were prepared by mixing ingredients with water in the amounts shown in the table below. The prepared beverages were measured for their absorbance at a wavelength of 660 nm and their ΔE value of transmitted light relative to pure water by the same procedure as in Test Example 1. All of the beverages had an absorbance of 0.06 or less and a ΔE value of transmitted light of 3.5 or less relative to pure water. Also, all of the beverages had a tannin content of 0 ppm (below detection limit).

The different beverages were subjected to sensory evaluation by the same procedure as in Test Example 1. The averages of their ratings are shown in the table given below.

**[Table 5]**

| | Trial Product 43 | Trial Product 44 |
|---|---|---|
| High fructose corn syrup (mass%) | 6.62 | |
| Citric acid (mass%) | 0.12 | |
| Linalool (ppb) | 500 | 500 |
| Benzaldehyde (ppb) | 100 | 100 |
| β-Damascenone (ppb) | 0 | 10 |
| Brix (°Bx) | 5.00 | 5.00 |
| Acidity (g/100g) | 0.12 | 0.12 |
| Sensory rating (20°C) | 4.3 | 5.0 |

As is evident from the above table, the sharpness of aftertaste was further enhanced by using benzaldehyde and β-damascenone in combination.

### (Test Example 6)

Different beverages were prepared by mixing ingredients with water in the amounts shown in the table below. The prepared beverages were measured for their absorbance at a wavelength of 660 nm and their ΔE value of transmitted light relative to pure water by the same procedure as in Test Example 1. All of the beverages had an absorbance of 0.06 or less and a ΔE value of transmitted light of 3.5 or less relative to pure water. Also, all of the beverages had a tannin content of 0 ppm (below detection limit).

The different beverages were subjected to sensory evaluation by the same procedure as in Test Example 1. The averages of their ratings are shown in the table given below.

**[Table 6]**

| | Trial Product 45 | Trial Product 46 |
|---|---|---|
| High fructose corn syrup (mass%) | 6.62 | |
| Citric acid (mass%) | 0.12 | |
| Linalool (ppb) | 500 | 500 |
| Benzaldehyde (ppb) | 100 | 100 |
| Methyl salicylate (ppb) | 0 | 30 |
| Brix (°Bx) | 5.00 | 5.00 |
| Acidity (g/100g) | 0.12 | 0.12 |
| Sensory rating (20°C) | 4.3 | 5.2 |

As is evident from the above table, the sharpness of aftertaste was further enhanced by using benzaldehyde and methyl salicylate in combination.

### (Test Example 7)

Different beverages were prepared by mixing ingredients with water in the amounts shown in the table below. The prepared beverages were measured for their absorbance at a wavelength of 660 nm and their ΔE value of transmitted light relative to pure water by the same procedure as in Test Example 1. All of the beverages had an absorbance of 0.06 or less and a ΔE value of transmitted light of 3.5 or less relative to pure water. Also, all of the beverages had a tannin content of 0 ppm (below detection limit).

The different beverages were subjected to sensory evaluation by the same procedure as in Test Example 1. The averages of their ratings are shown in the table given below.

**[Table 7]**

| | Trial Product 47 | Trial Product 48 |
|---|---|---|
| High fructose corn syrup (mass%) | 6.62 | |
| Citric acid (mass%) | 0.12 | |
| Linalool (ppb) | 500 | 500 |
| β-Damascenone (ppb) | 10 | 10 |
| Methyl salicylate (ppb) | 0 | 30 |
| Brix (°Bx) | 5.00 | 5.00 |
| Acidity (g/100g) | 0.12 | 0.12 |
| Sensory rating (20°C) | 4.0 | 5.2 |

As is evident from the above table, the sharpness of aftertaste was further enhanced by using β-damascenone and methyl salicylate in combination.

### (Test Example 8)

Different beverages were prepared by mixing ingredients with water in the amounts shown in the table below. The prepared beverages were measured for their absorbance at a wavelength of 660 nm and their ΔE value of transmitted light relative to pure water by the same procedure as in Test Example 1. All of the beverages had an absorbance of 0.06 or less and a ΔE value of transmitted light of 3.5 or less relative to pure water. Also, all of the beverages had a tannin content of 0 ppm (below detection limit).

The different beverages were subjected to sensory evaluation by the same procedure as in Test Example 1. The averages of their ratings are shown in the table given below.

**[Table 8]**

| | Trial Product 49 | Trial Product 50 | Trial Product 51 |
|---|---|---|---|
| High fructose corn syrup (mass%) | 6.62 | | |
| Citric acid (mass%) | 0.12 | | |
| Linalool (ppb) | 500 | 500 | 500 |
| Benzaldehyde (ppb) | 100 | 100 | 100 |
| β-Damascenone (ppb) | 10 | 10 | 10 |
| 1-Hexanol (ppb) | 0 | 5 | 200 |
| Brix (°Bx) | 5.00 | 5.00 | 5.00 |
| Acidity (g/100g) | 0.12 | 0.12 | 0.12 |
| Sensory rating (20°C) | 5.0 | 5.7 | 6.0 |

As is evident from the above table, the sharpness of aftertaste was further enhanced by the addition of 1-hexanol.

### (Test Example 9)

Different beverages were prepared by mixing ingredients with water in the amounts shown in the table below. The prepared beverages were measured for their absorbance at a wavelength of 660 nm and their ΔE value of transmitted light relative to pure water by the same procedure as in Test Example 1. All of the beverages had an absorbance of 0.06 or less and a ΔE value of transmitted light of 3.5 or less relative to pure water. Also, all of the beverages had a tannin content of 0 ppm (below detection limit).

The different beverages were subjected to sensory evaluation by the same procedure as in Test Example 1. The averages of their ratings are shown in the table given below.

**[Table 9]**

| | Trial Product 52 | Trial Product 53 | Trial Product 54 |
|---|---|---|---|
| High fructose corn syrup (mass%) | 6.62 | | |
| Citric acid (mass%) | 0.12 | | |
| Linalool (ppb) | 500 | 500 | 500 |
| Benzaldehyde (ppb) | 100 | 100 | 100 |
| β-Damascenone (ppb) | 10 | 10 | 10 |
| cis-3-Hexenol (ppb) | 0 | 10 | 1000 |
| Brix (°Bx) | 5.00 | 5.00 | 5.00 |
| Acidity (g/100g) | 0.12 | 0.12 | 0.12 |
| Sensory rating (20°C) | 5.0 | 5.3 | 6.0 |

As is evident from the above table, the sharpness of aftertaste was further enhanced by the addition of cis-3-hexenol.

### (Test Example 10)

Although no specific test results are presented, beverages prepared using glucose, fructose or sucrose instead of high fructose corn syrup also yielded similar results to those of the beverages prepared using high fructose corn syrup. Likewise, beverages prepared using any other acidulants than citric acid yielded similar results to those of the beverages using citric acid.

## Claims

1. A beverage comprising:
100 to 5000 ppb of linalool,
at least one selected from the group consisting of benzaldehyde, methyl salicylate, and β-damascenone, and
an acidulant
wherein the beverage satisfies the following requirements (i) to (v):
(i) an absorbance at a wavelength of 660 nm of 0.06 or less,
(ii) a ΔE (color difference) value of 3.5 or less relative to pure water,
(iii) a Brix of 1 to 10,
(iv) an acidity of 0.020 to 0.300 g/100 g, and
(v) a methyl salicylate content (a) of 5 to 500 ppb, and a weight ratio of the methyl salicylate content (a) to the linalool content (b) (a/b ratio) of 0.01 to 1.0;
a benzaldehyde content (c) of 5 to 300 ppb, and a weight ratio of the benzaldehyde content (c) to the linalool content (b) (c/b ratio) of 0.001 to 0.8; or
a β-damascenone content (d) of 1 to 100 ppb, and a weight ratio of the β-damascenone content (d) to the linalool content (b) (d/b ratio) of 0.0002 to 0.2.

2. The beverage according to claim 1, wherein the beverage further comprises 1 ppb or more of 1-hexanol and/or cis-3-hexenol.

3. The beverage according to claim 1 or 2, wherein the beverage has a tea flavor.

4. The beverage according to any one of claims 1 to 3, wherein the beverage has a tannin content of 150 ppm or less.

5. A method for producing a beverage comprising 100 to 5000 ppb of linalool and an acidulant, the beverage satisfying the following requirements (i) to (iv):
(i) an absorbance at a wavelength of 660 nm of 0.06 or less,
(ii) a ΔE (color difference) value of 3.5 or less relative to pure water,
(iii) a Brix of 1 to 10, and
(iv) an acidity of 0.020 to 0.300 g/100 g,
the method comprising the step of adding an ingredient to the beverage so as to ensure that the beverage contains at least one selected from the group consisting of benzaldehyde, methyl salicylate, and β-damascenone, and
the method further comprising any one or more of the steps of:
adjusting a methyl salicylate content (a) in the beverage to be in the range of 5 to 500 ppb, and a weight ratio of the methyl salicylate content (a) to the linalool content (b) (a/b ratio) in the beverage to be in the range of 0.01 to 1.0;
adjusting a benzaldehyde content (c) in the beverage to be in the range of 5 to 300 ppb, and a weight ratio of the benzaldehyde content (c) to the linalool content (b) (c/b ratio) in the beverage to be in the range of 0.001 to 0.8; or
adjusting a β-damascenone content (d) in the beverage to be in the range of 1 to 100 ppb, and a weight ratio of the β-damascenone content (d) to the linalool content (b) (d/b ratio) in the beverage to be in the range of 0.0002 to 0.2.

## Patentansprüche

1. Ein Getränk, umfassend:
100 bis 5000 ppb an Linalool,
mindestens eines, ausgewählt aus der Gruppe bestehend aus Benzaldehyd, Methylsalicylat und β-Damascenon, und
ein Säuerungsmittel,
wobei das Getränk die folgenden Bedingungen (i) bis (v) erfüllt:
(i) eine Absorption bei einer Wellenlänge von 660 nm von 0,06 oder weniger,
(ii) einen ΔE-Wert (Farbunterschied) von 3,5 oder weniger, bezogen auf reines Wasser,
(iii) einen Brix-Wert von 1 bis 10,
(iv) einen Säuregehalt von 0,020 bis 0,300 g/100g und
(v) einen Methylsalicylat-Gehalt (a) von 5 bis 500 ppb und ein Gewichtsverhältnis des Methylsalicylat-Gehalts (a) zu dem Linalool-Gehalt (b) (a/b-Verhältnis) von 0,01 bis 1,0;
einen Benzaldehyd-Gehalt (c) von 5 bis 300 ppb und ein Gewichtsverhältnis des Benzaldehyd-Gehalts (c) zu dem Linalool-Gehalt (b) (c/b-Verhältnis) von 0,001 bis 0,8; oder
einen β-Damascenon-Gehalt (d) von 1 bis 100 ppb und ein Gewichtsverhältnis des β-Damascenon-Gehalts (d) zu dem Linalool-Gehalt (b) (d/b-Verhältnis) von 0,0002 bis 0,2.

2. Das Getränk gemäß Anspruch 1, wobei das Getränk ferner 1 ppb oder mehr an 1-Hexanol und/oder cis-3-Hexenol umfasst.

3. Das Getränk gemäß Anspruch 1 oder 2, wobei das Getränk einen Teegeschmack aufweist.

4. Das Getränk gemäß einem der Ansprüche 1 bis 3, wobei das Getränk einen Tannin-Gehalt von 150 ppm oder weniger aufweist.

5. Ein Verfahren zur Herstellung eines Getränks, umfassend 100 bis 5000 ppb an Linalool und ein Säuerungsmittel, wobei das Getränk die folgenden Bedingungen (i) bis (iv) erfüllt:
(i) eine Absorption bei einer Wellenlänge von 660 nm von 0,06 oder weniger,
(ii) einen ΔE-Wert (Farbunterschied) von 3,5 oder weniger, bezogen auf reines Wasser,
(iii) einen Brix-Wert von 1 bis 10 und
(iv) einen Säuregehalt von 0,020 bis 0,300 g/100g,
wobei das Verfahren den Schritt des Zugebens eines Bestandteils zu dem Getränk umfasst, um sicherzustellen, dass das Getränk mindestens eines, ausgewählt aus der Gruppe bestehend aus Benzaldehyd, Methylsalicylat und β-Damascenon, enthält, und
wobei das Verfahren ferner einen oder mehrere der Schritte umfasst:
Einstellen eines Methylsalicylat-Gehalts (a) in dem Getränk, so dass dieser im Bereich von 5 bis 500 ppb liegt, und Einstellen eines Gewichtsverhältnisses des Methylsalicylat-Gehalts (a) zu dem Linalool-Gehalt (b) (a/b-Verhältnis) in dem Getränk, so dass dieses im Bereich von 0,01 bis 1,0 liegt;
Einstellen eines Benzaldehyd-Gehalts (c) in dem Getränk, so dass dieser im Bereich von 5 bis 300 ppb liegt, und Einstellen eines Gewichtsverhältnisses des Benzaldehyd-Gehalts (c) zu dem Linalool-Gehalt (b) (c/b-Verhältnis) in dem Getränk, so dass dieses im Bereich von 0,001 bis 0,8 liegt; oder
Einstellen eines β-Damascenon-Gehalts (d) in dem Getränk, so dass dieser im Bereich von 1 bis 100 ppb liegt, und Einstellen eines Gewichtsverhältnisses des β-Damascenon-Gehalts (d) zu dem Linalool-Gehalt (b) (d/b-Verhältnis) in dem Getränk, so dass dieses im Bereich von 0,0002 bis 0,2 liegt.

## Revendications

1. Boisson comprenant :
100 à 5000 ppb de linalool,
au moins l'un choisi dans le groupe constitué par le benzaldéhyde, le salicylate de méthyle, et la β-damascénone, et
un acidulant
dans laquelle la boisson satisfait aux exigences (i) à (v) suivantes :
(i) une absorbance de 0,06 ou moins à une longueur d'onde de 660 nm,
(ii) une valeur ΔE (différence de couleur) de 3,5 ou moins par rapport à l'eau pure,
(iii) une valeur Brix de 1 à 10,
(iv) une acidité de 0,020 à 0,300 g/100 g, et
(v) une teneur en salicylate de méthyle (a) de 5 à 500 ppb, et un rapport en poids de la teneur en salicylate de méthyle (a) à la teneur en linalool (b) (rapport a/b) de 0,01 à 1,0 ;
une teneur en benzaldéhyde (c) de 5 à 300 ppb, et un rapport en poids de la teneur en benzaldéhyde (c) à la teneur en linalool (b) (rapport c/b) de 0,001 à 0,8 ; ou
une teneur en β-damascénone (d) de 1 à 100 ppb, et un rapport en poids de la teneur en β-damascénone (d) à la teneur en linalool (b) (rapport d/b) de 0,0002 à 0,2.

2. Boisson selon la revendication 1, la boisson comprenant en outre 1 ppb ou plus de 1-hexanol et/ou de cis-3-hexénol.

3. Boisson selon la revendication 1 ou 2, la boisson ayant un goût de thé.

4. Boisson selon l'une quelconque des revendications 1 à 3, la boisson ayant une teneur en tanins de 150 ppm ou moins.

5. Procédé pour produire une boisson comprenant 100 à 5000 ppb de linalool et un acidulant, la boisson satisfaisant aux exigences (i) à (iv) suivantes :
(i) une absorbance de 0,06 ou moins à une longueur d'onde de 660 nm,
(ii) une valeur ΔE (différence de couleur) de 3,5 ou moins par rapport à l'eau pure,
(iii) une valeur Brix de 1 à 10, et
(iv) une acidité de 0,020 à 0,300 g/100 g,
le procédé comprenant l'étape d'addition d'un ingrédient à la boisson de façon à assurer que la boisson contienne au moins l'un choisi dans le groupe constitué par le benzaldéhyde, le salicylate de méthyle, et la β-damascénone, et
le procédé comprenant en outre l'une quelconque ou plusieurs des étapes suivantes :
ajustement de la teneur en salicylate de méthyle (a) de la boisson pour qu'elle soit située dans la plage allant de 5 à 500 ppb, et pour que le rapport en poids de la teneur en salicylate de méthyle (a) à la teneur en linalool (b) (rapport a/b) de la boisson soit situé dans la plage allant de 0,01 à 1,0 ;
l'ajustement de la teneur en benzaldéhyde (c) de la boisson pour qu'elle soit située dans la plage allant de 5 à 300 ppb, et pour que le rapport en poids de la teneur en benzaldéhyde (c) à la teneur en linalool (b) (rapport c/b) de la boisson soit situé dans la plage allant de 0,001 à 0,8 ; ou
l'ajustement de la teneur en β-damascénone (d) de la boisson pour qu'elle soit située dans la plage allant de 1 à 100 ppb, et pour que le rapport en poids de la teneur en β-damascénone (d) à la teneur en linalool (b) (rapport d/b) de la boisson soit situé dans la plage allant de 0,0002 à 0,2.
